(19) Europäisches Patentamt / European Patent Office / Office européen des brevets

(11) **EP 3 754 548 B1**

(12) **EUROPEAN PATENT SPECIFICATION**

(45) Date of publication and mention
of the grant of the patent:
**04.03.2026 Bulletin 2026/10**

(21) Application number: **19180588.6**

(22) Date of filing: **17.06.2019**

(51) International Patent Classification (IPC):
**G06V 10/82** *(2022.01)* **G06F 18/00** *(2023.01)*

(52) Cooperative Patent Classification (CPC):
**G06F 18/24133; G06V 10/82;** G06V 10/764

(54) **A METHOD FOR RECOGNIZING AN OBJECT IN AN IMAGE USING FEATURE VECTORS OF AN ENCODING NEURAL NETWORK**

VERFAHREN ZUM ERKENNEN EINES OBJEKTS IN EINEM BILD UNTER VERWENDUNG VON MERKMALSVEKTOREN EINES NEURONALEN ENCODING-NETZES

PROCÉDÉ DE RECONNAISSANCE D'UN OBJET DANS UNE IMAGE EN UTILISANT DES VECTEURS CARACTÉRISTIQUES D'UN RÉSEAU NEURONAL DE CODAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2020 Bulletin 2020/52**

(73) Proprietor: **SAP SE**
**69190 Walldorf (DE)**

(72) Inventors:
• **GARCIA PEREZ, Enrique**
**69190 Walldorf (DE)**
• **PAHDE, Frederik**
**69190 Walldorf (DE)**
• **PUSCAS, Mihai**
**69190 Walldorf (DE)**
• **NABI, Moin**
**69190 Walldorf (DE)**
• **KLEIN, Tassilo**
**69190 Walldorf (DE)**

(74) Representative: **DeltaPatents B.V.**
**Fellenoord 370**
**5611 ZL Eindhoven (NL)**

(56) References cited:
WO-A1-2018/192672 WO-A1-2019/011936
CN-A- 108 596 265 US-A1- 2019 046 068
US-B1- 10 223 586

• VO NAM ET AL: "Composing Text and Image for Image Retrieval - an Empirical Odyssey", 2019 IEEE/CVF CONFERENCE ON COMPUTER VISION AND PATTERN RECOGNITION (CVPR), IEEE, 15 June 2019 (2019-06-15), pages 6432 - 6441, XP033686476, [retrieved on 20200108], DOI: 10.1109/CVPR.2019.00660

## Description

### TECHNICAL FIELD

The disclosure relates to computer vision, and particularly to a method for recognizing an object in an image.

### Background

Object categorization may be a challenging problem as the objects belonging to the same category may vary greatly in various respects. For example, in the category birds, large variations in shapes and color appearances may be present in different birds e.g. they may vary in colors and may have pictures or patterns on them. However, the objects have to be recognized as belonging to the same category despite such diversity. The same applies analogously to other classes of objects.

Reference is made to the international patent with publication number WO/2018/192672 and title 'Target Detection in Latent Space', and to the American patent application publication with publication number US 10 223 586 B1 and title "Multi-modal electronic document classification".

Summary

The invention is defined by the accompanying claims.

It is an objective of embodiments of the invention to provide for a method for recognizing an object in an image, computer program and a system. Said objective is solved by the subject matter of the independent claims. Advantageous embodiments are described in the dependent claims.

In one aspect, the invention relates to a method as defined in independent claim 1, for recognizing an object in an input image. The method comprises:

- providing an image encoder configured to encode an image to provide a visual feature vector representing the image in an image space, the image encoder comprising a trained convolutional neural network, wherein the image space is defined by a fully connected layer of the convolutional neural network;
- providing a multi-modal center of mass vectors representing object classes in the image space;
- encoding by the image encoder the input image to provide an input visual feature vector representing the input image;
- recognizing the object by selecting one of the visual center of mass vectors using a proximity criterion relative to the input visual feature vector.

In one aspect, the invention relates to a object recognition method. The method comprises:

- providing an image encoder configured to encode an image to provide a visual feature vector representing the image in an image space, the image encoder comprising a trained convolutional neural network, wherein the encoder comprising a trained convolutional neural network, wherein the image space is defined by a fully connected layer of the convolutional neural network;
- providing a generator configured to generate a visual feature vector (from a textual sample) representing a textual sample in the image space, the generator comprising a trained generative model;
- providing a dataset comprising images of a number of classes and textual samples descriptive of the respective images;
- encoding by the image encoder the images of the dataset to provide respective visual feature vectors representing the images in the image space;
- generating by the generator visual feature vectors (from textual samples) representing the textual samples of the dataset in the image space;
- combining the visual feature vectors and the textual feature vectors of a same class of the classes into a multi-modal center of mass feature vector;
- storing the multi-modal center of mass feature vectors as reference values for object recognition.

In another aspect, the invention relates to a computer program comprising machine executable instructions for execution by a processor, wherein execution of the machine executable instructions causes the processor to perform the method of any one of the preceding embodiments.

In another aspect, the invention relates to a system configured to perform a method of any one of the preceding embodiments.

It is understood that one or more of the aforementioned embodiments may be combined as long as the combined embodiments are not mutually exclusive.

The details of one or more implementations are set forth in the accompanying drawings and the description below. Other features will be apparent from the description and drawings, and from the claims.

**Brief description of the drawings**

FIG. 1A depicts a schematic block diagram of a computer system in accordance with an example of the present subject matter.

FIG. 1B depicts a schematic block diagram of a computer system in accordance with an example of the present subject matter.

FIG. 1C depicts a schematic block diagram of a computer system in accordance with an example of the present subject matter.

FIG. 2 is a flowchart of a method for recognizing an object in an input image in accordance with an example of the present subject matter.

FIG. 3 is a flowchart of a method for generating visual feature vectors in accordance with an example of the present subject matter.

FIG. 4A is a diagram illustrating a method for recognizing an object in an image in accordance with an example of the present subject matter.

FIG. 4B is a diagram illustrating a method for recognizing an object in an image in accordance with an example of the present subject matter.

FIG. 4C is a table showing examples classification results in accordance with an example of the present subject matter.

FIG. 5 is a diagram of a computer system for training a text-conditional generative model in accordance with an example of the present subject matter.

Like reference symbols in the various drawings indicate like elements.

**Detailed description**

The descriptions of the various embodiments of the present invention will be presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

The input image may be a digital image. The present subject matter may enable a digital image analysis for recognizing objects in digital images. For example, using the trained CNN of the image encoder may enable the classification of input digital images based on low-level features such as edges or pixel attributes of digital images. The object of the input image may be recognized as the object of the selected visual center of mass feature vector.

The visual center of mass feature vectors representing the object classes in the image space may be obtained from images and/or textual samples. For example, a visual center of mass vector representing a given object class may be the combination of visual feature vectors of images and/or visual feature vectors of textual samples having that given object class. The visual center of mass feature vectors may for example be obtained from a few-shot training sample that has a small number of images per class of the object classes. By leveraging cross-modally generated feature vectors the image space may be condensed which may improve the classification accuracy of unseen samples in few-shot scenarios.

The visual feature vectors such as the multi-modal center of mass feature vectors may enable a compressed version of the input images because the image space may enable to represent images by vectors of numbers where the dimensions of the vectors are much lesser than the dimensions of an original space of images. Thus, the present subject matter may enable to encode data for reliable and/or efficient storage. A textual sample as used herein may refer to a computer readable, text-related data having a textual description of an image. The visual center of mass feature vector is a vector. The visual feature vector is a vector. The multi-modal visual center of mass feature vector is a vector. The vector may for example be a vector of numbers.

The CNN of the image encoder may comprise components. These components may be an input and an output layer, as well as multiple hidden layers. The hidden layers of the CNN may for example comprise convolutional layers, RELU layer, pooling layers, fully connected layers and normalization layers. The present method may comprise: configuring at least part of the components of the CNN of the image encoder such that the image space may enable a discriminative distribution of vectors in the image space. For example, the number of nodes or units in each of the fully connected layers of the CNN may be configured or set to a predefined number e.g. the last hidden layers may be provided with a number of nodes that is smaller than a predefined maximum threshold. The maximum threshold may for example be 256. This may enable to control the size of the generated feature vectors for compact storage of images and fast processing while still enabling a reliable representation of the images. The image space may for example be defined by the last fully connected hidden layer of the CNN of the image encoder.

In one example, the CNN of the image encoder may be a residual neural network. This may provide a powerful feature representation and may enable the classification in the image space to be performed with a nearest neighbor approach. The nearest neighbor approach may be advantageous for few-shot learning. For example, the selecting of the one of the visual center of mass vectors may be performed using a nearest neighbor search (NNS), which is a form of proximity search. The nearest neighbor search may enable to find one of the visual center of mass vectors in the image space as the closest vector (or most similar) to the input visual feature vector. For example, the closeness may be quantified using a dissimilarity function or a distance function. By using the image space of the feature vectors, an overfitting of the data may be avoided because the image space is limited compared to the original space of images which can be a high-dimensional space that is too extensive.

An object class refers to a set of objects that are similar in shape and appearance such as human faces, bodies, cars, bird species, flowers, etc. The object classes may be novel classes or unseen classes. The class of the input image may be a novel class that may need to be determined. A novel class refers to a class that is represented by a number of images (having that novel class) that is smaller than a predefined number of images e.g. 10. The CNN of the image encoder may be trained with images that have base classes. The base classes may be different from the novel classes. The base classes may be classes for which there is sufficient data samples, and novel classes are underrepresented in the data. A base class refers to a class that is represented by a number of images (having that base class) that is larger than the predefined number of images.

According to one embodiment, the proximity criterion comprises: using a distance function for determining the distance of the input visual feature vector to each visual center of mass feature vector of the visual center of mass feature vectors; selecting the visual center of mass feature vector having the smallest distance to the input visual feature vector.

The distance function is a function that defines a distance between each of the visual center of mass feature vectors and the input visual feature vector. The distance function may for example enable to measure or determine a cosine distance. This embodiment may be advantageous as it may provide an accurate classification and thus an improved objet recognition. For example, the visual center of mass feature vectors may be stored in a database of the computer system e.g. in association with images from which they have been derived. For example, the visual center of mass feature vectors may be provided as an index structure used for searching images in the database. Upon receiving the input image at the image encoder, the present method may comprise recognizing or determining the object class of the input image and retrieving from the database all images that have that same object class of the input image. In other terms, the input image may be a search criterion for searching similar images in the database. Using the visual center of mass feature vectors may provide an efficient search and accurate search results.

According to one embodiment, the method further comprises repeating the encoding and the recognizing steps for recognizing objects in multiple inputs images, resulting in multiple recognized objects, storing the input images in a database and searching the images of the database using the recognized object classes as a search criterion. The input images may be stored in association with labels indicating their classes. This may enable to search images based on their content in an efficient manner.

According to one embodiment, the method further comprises entering the class of the recognized object into an enterprise resource planning system or a catalogue system, querying a database related to the recognized object using the class for the query.

According to one embodiment, the method further comprises entering the recognized object class into an electronic payment system, performing a database access for obtaining a price information related to the recognized object and out-putting a request for payment in accordance with the obtained price information.

According to one embodiment, the method further comprises generating by the generator at least one visual feature vector representing in the image space at least one further textual sample of at least one further class; if the at least one visual feature vector comprises multiple visual feature vectors of a same further class of the at least one further class combining the multiple visual feature vectors of that same further class into a visual center of mass feature vector; storing the at least one visual center of mass feature vector and/or the at least one visual feature vector as further reference values for object recognition.

For example, the object classes $C_{novel}$ comprise classes C1, C2 and C3. The at least one further class may comprise classes C4 and C5. The dataset may comprise multiple further textual samples descriptive of images having the class C5. The dataset may comprise one further textual sample descriptive of an image having the class C4. For class C5, this embodiment may enable to combine the visual feature vectors of the multiple further textual samples descriptive of images having the class C5, into a visual center of mass feature vector. Since class C4 is associated with a single textual sample, this embodiment may provide the visual feature vector (no combination) of that single textual sample. This embodiment may enable to store the visual center of mass feature vector of C5 and the visual feature vector of C4.

This embodiment may enable a zero-shot learning method e.g. without having images for the further class, the present method may be configured to classify objects into that further class. This embodiment may provide the basis for recognizing a category, forming a new category. This embodiment may enable to classify objects in existing categories and recognizing the objects that do not belong to any existing categories.

According to one embodiment, the combining of the feature vectors comprises computing a weighted average of the feature vectors. This embodiment may enable an accurate representation of the images of the dataset. Thus, the object recognition may be improved. By leveraging cross-modally or multi-modally generated feature vectors, the image space may be a condensed space and may thus move the single-modal feature vectors towards a more reliable multimodal prototypes improving the classification accuracy of unseen samples in few-shot scenarios.

According to one embodiment, generating by the generator visual feature vectors representing the textual samples of the dataset in the image space comprises encoding by a text encoder each textual sample to provide a textual feature vector in a textual space, performing a compression/condensing (e.g. using a conditioning augmentation layer) of the textual feature vector to a smaller vector dimension and generating from the compressed textual feature vector the visual feature vector in the image space, the text encoder comprising a trained convolutional neural network, wherein the textual space is defined by a last hidden layer of the convolutional neural network. For example, the generation of the visual feature vector from the compressed textual feature vector comprises sampling a noise vector from a noise prior and concatenating the noise vector with the compressed textual feature vector. This results in a concatenated (or noised) text vector, generating from the concatenated feature vector the visual feature vector.

The text encoder may enable to represent fine-grained visual descriptions. The text encoder may for example be a trained text-based CNN e.g. a hybrid character-level convolutional recurrent neural network. In one example, the training of the text encoder may use textual samples descriptive of images having the classes of the base classes.

According to one embodiment, the method further comprises obtaining the trained generative model by: providing a discriminative model; providing a base training dataset comprising at least textual samples descriptive of images of a number of base classes; inputting the textual samples of the base classes into the text encoder; out-putting by the text encoder textual feature vectors of the input textual samples; training the generative model and the discriminative model using the textual feature vectors of the input textual samples, the training comprising: training the generative model to generate visual feature vectors from the textual feature vectors and training the discriminative model, using generated visual feature vectors by the generative model and real visual feature vectors of images, to determine if a visual feature vector is a real visual feature vector or generated feature vector, and to classify the visual feature vector into one of the base classes, wherein the training is performed with backpropagation for optimizing a loss function of the generative model and another loss function of the discriminative model. This may enable that the optimizing of the loss functions is performed in an adversarial way.

For example, the generative model and discriminative model may be the generator and discriminator of a GAN framework. For example, the discriminator looks at real visual feature vectors of real images and generated visual feature vectors separately. The discriminator may distinguish whether an input visual feature vector is real or generated. In addition, the discriminator may classify the input visual feature vector (e.g. into one of base classes). This may enable that the generator is conditioned with textual samples, and the discriminator can be used directly as a classifier for the final image-only classification task (e.g. when there is not access to the text data in the test time). This may enable that, instead of generating images from noise only, textual samples may be combined with noise and may be used by the generative model to generate the images. The training of the generator and discriminator of the GAN may then be performed in an adversarial way as with training the GAN, but the generator is conditioned with the textual samples. This may enable a better convergence of the training.

Both networks of the discriminative model and generative model are trained in alternating steps. For example, the generative model's parameters may be fixed a single iteration of gradient descent on the discriminative model is performed using the real and the generated visual feature vectors. Then the discriminative model's parameters may be fixed and the generative model may be trained for another iteration.

The training of the discriminative model comprises a backpropagation of an error of the classification of an input (the input may be a generated visual feature vector or a real visual feature vector of a real image) into one of the base classes and an error on the determination if the input is a real or fake(generated) visual feature vector. The training of the generative model comprises a backpropagation of an error of the classification of an input (the input may be a generated feature vector by the generative model during training) into one of the base classes and an error on the determination if the input is a real or fake visual feature vector. The weights of each of the networks of the discriminative model and the generative model may be updated based on the errors back propagated.

For performing the classification into one of the base classes and the determination if an input is a real or fake visual feature vector, the CNN of the discriminative model may comprise an output layer having nodes representing the base classes and the nodes representing fake and real options. For example, the output layer of the CNN of the discriminative model may comprise two head layers, one head layer for the class labels and another head layer for the real/fake options.

This embodiment may enable to train the generative model in an adversarial way such that the discriminative model may be in a feedback loop with the ground truth of the images and the generative model may be in a feedback loop with the discriminative model. For example, the discriminative model may receive visual feature vectors which are labeled as being generated from real images or as being provided by the generative model.

According to one embodiment, the base training dataset further comprises images of the number of base classes. The method further comprises: inputting the images of the base classes into the image encoder; outputting by the image encoder the real visual feature vectors of the input images.

For example, the generative model may be trained in a generative adversarial nets (GAN) framework, wherein the generative model is the generator of the GAN. In addition, the generative model may be conditioned with textual samples.

According to one embodiment, the loss function of the discriminative model is

$$\mathbb{E}_{x_i \sim p_{data}}[\log D(\Phi_I(x_i))] + \mathbb{E}_{t_i \sim p_{data},z}[\log D(G_t(\Phi_T(t_i), z))] + \mathbb{E}_{C,I}[\log p(C|I)]$$ and the loss func-

tion of the generative model is $$\mathbb{E}_{x_i \sim p_{data}}[\log D(\Phi_I(x_i))] + \mathbb{E}_{t_i \sim p_{data},z}[\log D(G_t(\Phi_T(t_i), z))] - Q ,$$

where $Q \triangleq \mathbb{E}_{C,I}[\log p(C|I)]$ , where $\Phi_I(x_i)$ is the feature vector of the image $x_i$ in the image space $I$, $\Phi_T(t_i)$ is the feature vector of the textual sample $t_i$ in the textual space $T$, $G_t$ is the generative model and $D$ is the discriminative model, $z$ is a noise source that is used for conditioning augmentation of the textual sample $t_i$.

According to one embodiment, the generator is a generator of a GAN framework. This embodiment may be advantageous as Generative adversarial nets (GAN) may provide a reliable framework to train the generative model. The GAN framework may be configured to use the loss functions and the CNN configuration of the generative model as described herein. This embodiment may enable to train a deep convolutional generative adversarial network conditioned on text features encoded by a hybrid character-level convolutional recurrent neural network. Both the generator network G and the discriminator network D of the GAN perform feed-forward inference conditioned on the text feature. In another the generative model may be trained using a loss function relative to the visual feature vectors 615 using a-back-propagation indicative of the error in generating the visual feature vectors 615.

According to one embodiment, the computer system is a server computer system having an electronic memory storing the visual center of mass vectors representing object classes in the image space, the computer system having a network interface for enabling downloading of the visual center of mass vectors to an end user device. According to one embodiment, the end user device being battery powered handheld appliance. This embodiment may enable a centralized management of the object recognition for ensuring consistent classification results between different end user devices.

According to one embodiment, the computer system comprises a battery powered handheld device. This may particularly be advantageous as the present method may be less resource consuming. For example, the handheld device may be configured to store the visual center of mass feature vectors and the trained image encoder and performing at least part of the present method with less resources compared to processing images.

According to one embodiment, the computer system is a medical device, wherein at least one of the classes is indicative of a disease being diagnosable by optical inspection.

According to one embodiment, the computer system is a computer vision system. This embodiment may for example enable face recognition even if only textual description of person is available. This may particularly be advantageous for a surveillance system or a control system such as for autonomous driving.

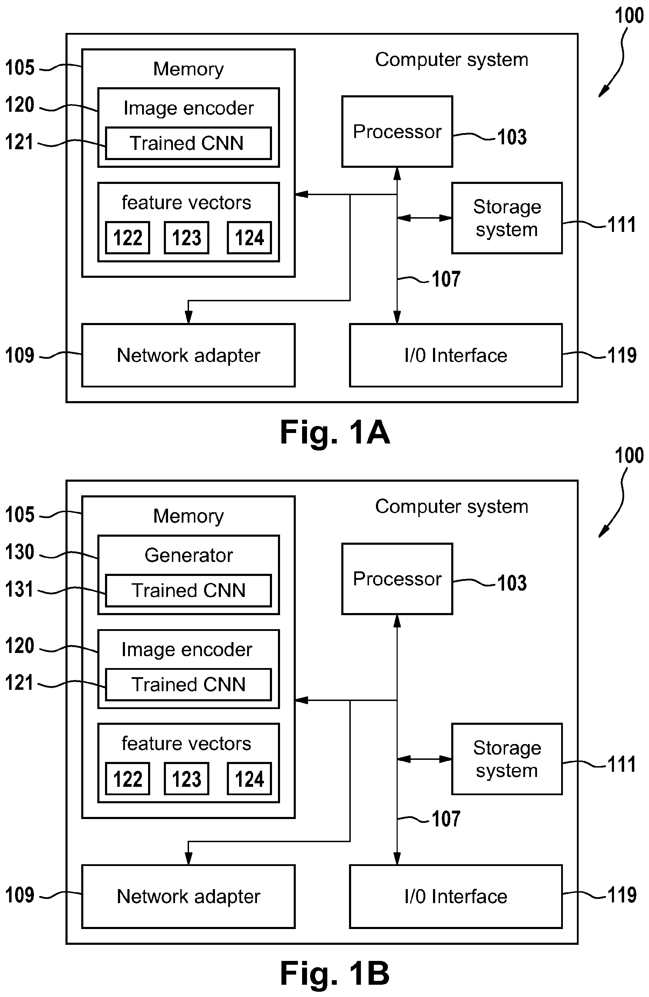

**Figure 1A** depicts a schematic block diagram of a computer system 100 in accordance with an example of the present subject matter. The computer system 100 may be a mobile phone, measuring device, smartphone, PDA, laptop, netbook or workstation.

The components of the computer system 100 may include, but are not limited to, one or more processors or processing units 103, a storage system 111, a memory unit 105, and a bus 107 that couples various system components including memory unit 105 to processor 103. The storage system 111 may include for example a hard disk drive (HDD). The memory unit 105 may include computer system readable media in the form of volatile memory, such as random access memory (RAM) and/or cache memory.

The computer system 100 may communicate with one or more external devices such as a keyboard, a pointing device, a display, etc.; one or more devices that enable a user to interact with the computer system 100; and/or any devices (e.g., network card, modem, etc.) that enable the computer system 100 to communicate with one or more other computing devices. Such communication may occur via I/O interface(s) 119. Still yet, the computer system 100 may communicate with one or more networks such as a local area network (LAN), a general wide area network (WAN), and/or a public network (e.g., the Internet) via a network adapter 109. As depicted, the network adapter 109 communicates with the other components of the computer system 100 via bus 107. The memory unit 105 is configured to store applications that are executable on the processor 103. For example, the memory unit 105 may comprise an operating system as well as application programs.

The memory unit 105 may comprise an image encoder 120. The image encoder 120 may comprise a trained convolutional neural network (CNN) 121. In one example, the image encoder may be the trained CNN 121. Using the CNN 121, the image encoder may be advantageous as it may use little pre-processing compared to other image classification algorithms. The CNN 121 may for example be constructed using convolution, pooling and thresholding activation function layers, followed by fully-connected layers to project onto an image space. For example, CNN parameters of the CNN 121 may be configured in accordance with the present subject matter such that the trained CNN may generate from an image $x_i$ a visual feature vector $\Phi_I(x_i)$ representing the image $x_i$ in an image space $I$. For example, the CNN parameter may comprise at least one of the number of layers, the feature mapping, the number of channels per layer, the pooling operation's type, the strides of the pooling operation, the number of fully connected layers and activation functions. The image space may for example be defined using the trained CNN 121 in order to provide an optimal discrimination between different object classes. For example, a fully connected layer of the trained CNN 121 may be employed as the image space $I$ e.g. the last hidden layer of the trained CNN 121 may be employed as the image space. This may enable to represent an image in the image space $I$ by the activation vector of that hidden layer.

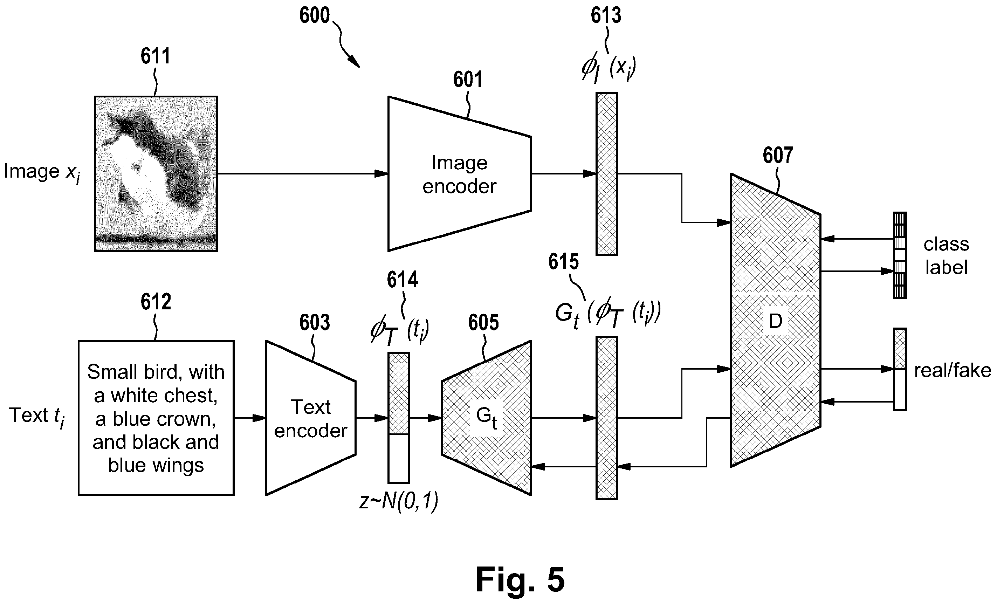

In one example, the CNN 121 may be obtained from a residual neural network such as ResNet-18 (K. He, X. Zhang, S. Ren, and J. Sun. Deep residual learning for image recognition. In CVPR, pages 770-778, 2016. 6) by halving the dimensionality of every layer of the residual neural network and adding two 256-dimensional fully connected layers with a LeakyRelu activation after the last pooling layer of the residual neural network, followed by a softmax classification layer with a number of units corresponding to a predefined number of object classes. Using the residual neural network may be advantageous as it can be trained with 152 layers while still having lower complexity than other CNNs. For example, the CNN 121 may be trained on base classes $C_{base}$ using the Adam optimizer (D. P. Kingma and J. Ba. Adam: A method for stochastic optimization. ICLR, 2014. 6) for 200 iterations with a learning rate of $10^{-3}$, which is decreased to a learning rate of $5 \times 10^{-4}$ after 20 iterations. The last fully connected hidden layer of the CNN 121 is employed as the image space $I$ (or image embedding space). The image space $I$ may enable to represent images by vectors of numbers where the dimensions of the vector is much lesser than the dimensions of an original space of images. The image encoder may for example be trained using images of base classes $C_{base}$, wherein the $C_{base}$ classes may be used to train the generative model as described with reference to Figure 5. This may provide a discriminative visual embedding space (or image space).

The memory unit 105 may for example store visual center of mass feature vectors 122 that represent novel object classes $C_{novel}$, in the image space. For example, each visual center of mass feature vector may be determined or generated from a set of images having the same object class of $C_{novel}$ that the visual center of mass feature vector represents. The memory unit 105 may further store visual center of mass feature vectors 123 that represent the novel object classes $C_{novel}$, of textual samples in the image space. For example, each visual center of mass feature vector 123 may be determined or generated from a set of textual samples having the same object class of $C_{novel}$ that the visual center of mass feature vector 123 represents.

In one example, the memory unit 105 may further store for each object class $C_{novel}$, a combination of the respective visual center of mass feature vectors 122 and 123 obtained from images and textual samples, resulting in multi-modal center of mass feature vectors 124. The combination may for example be a weighted average.

The system of Figure 1A may enable to perform a nearest neighbor search in visual embedding space, using one of the visual center of mass feature vectors 122 and 123 and the multi-modal center of mass feature vectors 124.

**Figure 1B** depicts a schematic block diagram of the computer system 100 in accordance with an example of the present subject matter. The computer system 100 of Figure 1B may comprise in addition to the components of the computer system of Figure 1A, a generator 130 in the memory unit 105. The generator 130 may comprise a trained generative model 131. The generative model 131 may for example be a CNN. The generative model may be referred to as a text-conditional generative network.

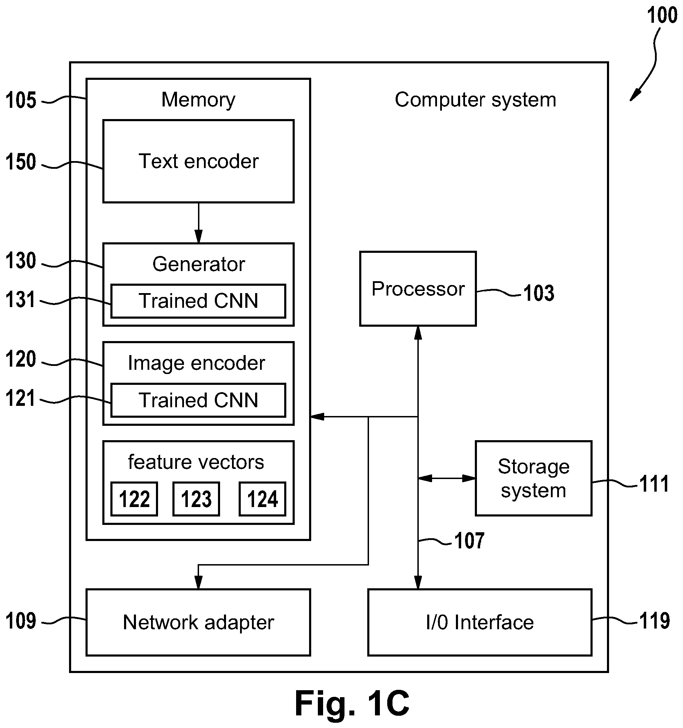

The generator 130 may be configured to receive pre-processed textual samples $t_i$. For example, the textual sample $t_i$ may be pre-processed such that a text vector $\Phi_T(t_i)$ representing the textual sample $t_i$ in a textual space $T$ may be generated. For example, the text vector $\Phi_T(t_i)$ may be (pre)stored in the computer system 100 or may be obtained by the computer system as described with reference to Figure 1C.

The text vector $\Phi_T(t_i)$ may first be passed, in the generator 130, into a conditioning augmentation layer to condense/compress the input space during training. This is followed by some up-sampling convolutions, yielding a 256-dimension output vector, equivalent to the dimensionality of the image space $I$. For example, the generator 130 may be configured to sample a noise vector from a noise prior $z \in \mathbb{R}^Z \sim N(0,1)$ and to concatenate the noise vector with a text vector $\Phi_T(t_i)$ representing a textual sample $t_i$ in the textual space $T$. This results in a concatenated (or noised) text vector $\Phi_T(t_i)$. Before concatenation, the text vector $\Phi_T(t_i)$ may for example be compressed using a fully-connected layer (such as the conditioning augmentation layer) to a small dimension followed by a leaky-ReLU activation. The generative model 131 may generate from the concatenated vector $\Phi_T(t_i)$ a visual feature vector $G_t(\Phi_T(t_i))$ representing the textual sample $t_i$ in the image space $I$. Thus, the image generation by the generative model 131 corresponds to a feed-forward inference in the generative model conditioned on a query text and a noise sample. The inference may proceed as in a normal deconvolutional network to feed-forward it through the generative model.

The generative model 131 may for example be denoted as a $G_t : \mathbb{R}^Y \times \mathbb{R}^V \rightarrow \mathbb{R}^B$, where V is the dimension of the text space, B is the dimension of the image space, and Y is the dimension of the noise input to the generative model.

Hence, the system of Figure 1B may enable to use textual descriptions provided in training data to generate additional visual feature vectors compensating the few-shot feature sparsity. Also, the representation vector as enabled by the generative model 131 in the image space has a lower dimensionality than the original image. Consequentially, the generation of feature vectors is a computational cheaper task compared to the generation of images.

The generative model 131 may be trained as described in Figure 5 such that it learns a mapping from an encoded textual description into the pre-trained image space $I$ for a given training tuple $(x_i, t_i, y_i)$ according to $G_t(\Phi_T(t_i)) \approx \Phi_T(x_i)$.

**Figure 1C** depicts a schematic block diagram of the computer system 100 in accordance with an example of the present subject matter. The computer system 100 may comprise in addition to the components of the computer system of Figure 1B, a text encoder 150. The generator 130 may comprise a trained generative model 131. The generative model 131 may for example be a CNN. The generative model 131 may be referred to as a text-conditional generative network.

The generator 130 may be configured to receive a pre-processed textual sample $t_i$. For example, the textual sample may be pre-processed such that a text vector $\Phi_T(t_i)$ representing the textual sample in a textual space $T$ may be generated. The textual sample $t_i$ may for example be pre-processed by the text encoder 150. The text encoder 150 may for example be a trained CNN (text-based CNN), that is configured to receive a textual sample that is descriptive of an image and to generate from the textual sample a text vector representing the textual sample in the textual space $T$ (text embedding space). For example, the text encoder 150 may be used as a standard CNN for images, except that the image width is 1 pixel and the number of channels is equal to the alphabet size. In another example, the text encoder 150 may be the pre-trained text encoder as described in S. Reed, Z. Akata, H. Lee, and B. Schiele. Learning deep representations of fine-grained visual descriptions. In CVPR, pages 49-58, 2016. 3, 5, yielding the given textual space as $T \subset \mathbb{R}^{1024}$ with a CNN-RNN-based encoding function.

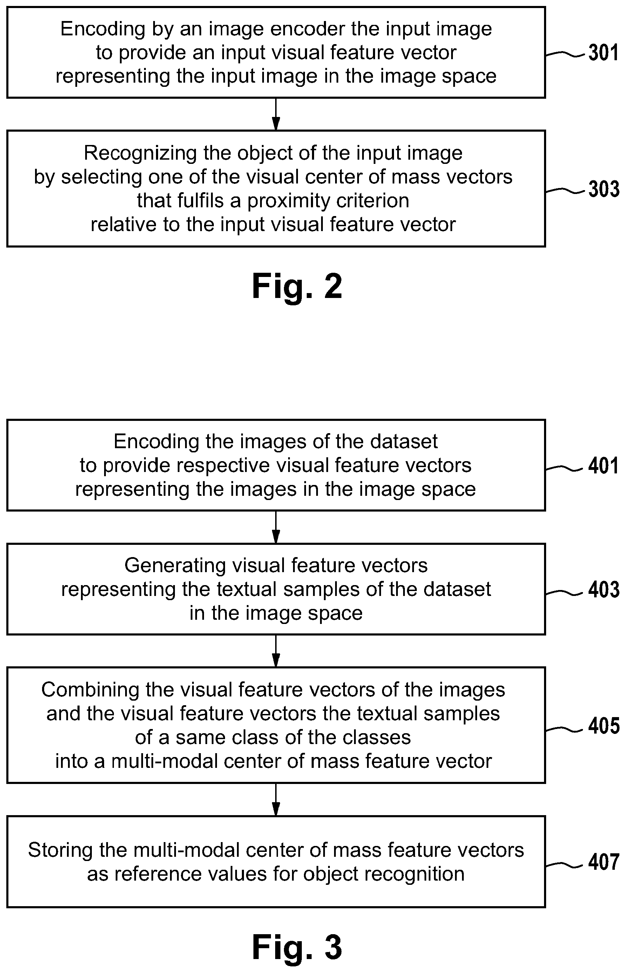

**Figure 2** is a flowchart of a method for recognizing an object in an input image. The recognition may enable to identify a pattern in data and to associate the identified pattern with an object. The input image may for example be a digital image having a number of pixels. For example, the digital image may contain a fixed number of rows and columns of pixels, wherein pixels are the smallest individual element in an image, holding values that represent the brightness of a given color at any specific point. The input image may for example comprise 28 x 28 pixels.

The input image may for example be accessed or received by an image encoder from a predefined database of images such as a database Caltech-UCSD Birds 200 (CUB-200) with photos of 200 bird species. The image encoder may for example be the image encoder of Figures 1A-1C.

The image encoder may be a trained convolutional neural network (CNN) that is configured to access an input image and generate a L-dimensional feature vector, where L may be determined using the structure of the CNN. The CNN of the image encoder may for example be constructed using convolution, pooling and thresholding activation function layers, followed by fully-connected layers to project onto the image space. The CNN of the image encoder may for example be obtained by composing several different functions. For example, in addition to linear filters used for the convolution, non-linear operators may be used. The non-linearity may for example be obtained by following a linear filter by a non-linear activation function (e.g. Rectified Linear Unit (ReLU)), applied to each component of a feature map. The last hidden fully connected layer of the CNN of the image encoder may be employed as the image space. For example, the visual feature vector that is produced by the image encoder from an image may be the activation vector of that last hidden fully connected layer of the CNN of the image encoder.

The image encoder may encode in step 301 the input image to provide an input visual feature vector representing the input image in the image space as described with reference to Figure 1A or 1B. In other terms, the image encoder may generate in step 301 using the input image an input visual feature vector representing the input image in the image space. For example, by inputting the 28x28 pixel image, to the trained CNN 121 of the image encoder, the trained CNN 121 may apply the trained weights at each layer resulting in the last hidden layer of the trained CNN having activation values that may be used as the input visual feature vector. In other terms, the input visual feature vector may be the activation vector of the last fully connected hidden layer of the CNN of the image encoder.

The object of the input image may be recognized in step 303, by selecting one of the visual center of mass vectors that fulfils a proximity criterion relative to the input visual feature vector. The visual center of mass vectors may for example be the vectors 122-124 stored in the computer system 100. In another example, the visual center of mass vectors may be obtained by the method of Figure 3, before performing step 303. The proximity criterion may typically be (or comprise) a requirement that the class of the input image (or the class of the object in the input image) is the class represented by the closest visual feature vector to the input visual feature vector. For example, a distance function such as a cosine distance may be used to determine the distance of the input visual feature vector to each multi-modal center of mass feature vector 124 of the multi-modal center of mass feature vectors 124 and the multi-modal center of mass feature vector 124 having the smallest distance to the input visual feature vector may be selected. The class represented by the selected multi-modal center of mass feature vector may be provided as the recognized object class of the object in the input image.

In another example, the distance of the input visual feature vector may be determined to each visual center of mass feature vector 122 of the visual center of mass feature vectors 122 which are obtained from images only and the visual center of mass feature vector 122 having the smallest distance to the input visual feature vector may be selected. This may for example be advantageous when enough images exist in the few-short training sample or when the images of the few-short training sample may be reused in the training.

In another example, the distance of the input visual feature vector may be determined to each visual center of mass feature vector 123 of the visual center of mass feature vectors 123 which are obtained from textual samples only and the visual center of mass feature vector 123 having the smallest distance to the input visual feature vector may be selected. This may for example be advantageous in case of zero-shot training samples.

**Figure 3** is a flowchart of a method for generating visual feature vectors in accordance with an example of the present subject matter. For example, a dataset comprising images of a number of classes e.g. $C_{novel}$ and textual samples descriptive of the respective images may be provided such that an image encoder may encode in step 401, the images of the dataset to provide respective visual feature vectors representing the images in the image space. The image encoder may for example be one of the image encoders described with reference to Figures 1A to 1C. In step 403, a generator such as the generator of Figures 1B-C may generate visual feature vectors from textual samples that represent the textual samples of the dataset in the image space. In step 405, the visual feature vectors of the images and the visual feature vectors the textual samples of a same class of the classes may be combined into a multi-modal center of mass feature vector. The multi-modal center of mass feature vectors may be stored in step 407 as reference values for object recognition.

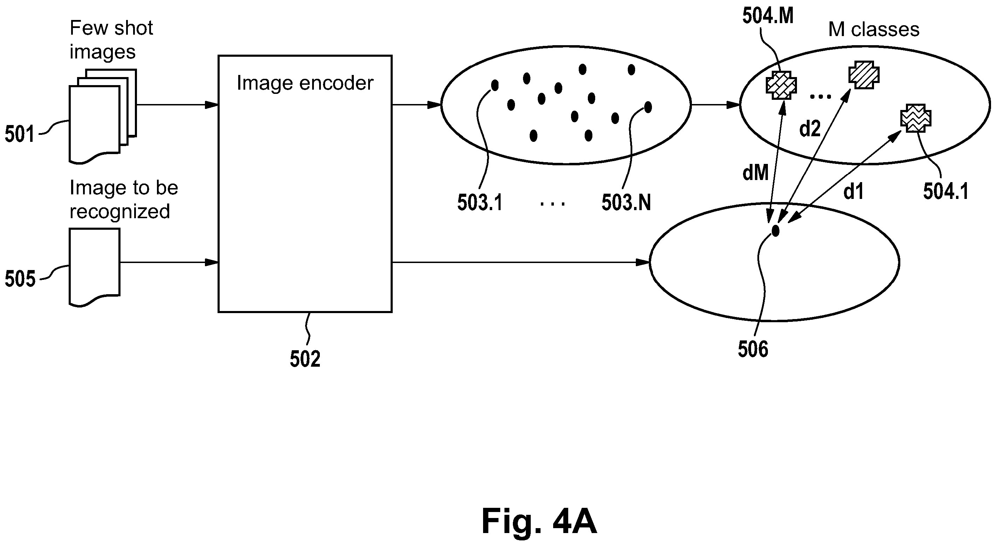

**Figure 4A** is a diagram illustrating a method for recognizing an object in an image 505.

For example, a discrete label or class space $C = \{1, ... , R\}$ of $R$ classes may be provided. In the few-shot setting, two disjunct subsets of the label space may be used: subset $C_{base}$ comprises base labels or classes for which sufficient data samples exist, and subset $C_{novel}$ comprises novel classes which are underrepresented in the data. Both subsets exhaust the label space $C$, in that $C = C_{base} \cup C_{novel}$. The number of novel classes may be smaller than the number of base classes, $|C_{novel}| < |C_{base}|$.

Based on the R classes, a dataset or training dataset may be determined or defined as follows. The training dataset $S_{train}$ may consist of tuples $\{(x_i, y_i)\}_{i=1}^{n}$ of images $x_i$ and associated classes $y_i$ of the whole class space C. The training dataset $S_{train}$ may comprise a few-shot training dataset $S_{train}^{novel}$ that may be defined as follows $S_{train}^{novel} = \{(x_i, y_i) : (x_i, y_i) \in S_{train}, y_i \in C_{novel}\}_{i=1}^{q} \subset S_{train}$, where in accordance with a few-shot scenario $q = |S_{train}^{novel}| \ll |S_{train}| = n$. Additionally, in a few-shot learning scenario, the number of samples per class may be limited to $g$, denoted by $S_{train}^{novel}(g)$.

For example, the few-shot training dataset $S_{train}^{novel}$ comprises a number q of images 501 which may be input to an image encoder 502 such as the image encoder of Figure 1A or the image encoder of Figure 1B. For example, the images of the few-shot training dataset $S_{train}^{novel}$ 501 may have or may represent a number of M novel classes such as M bird species e.g. M = $|C_{novel}|$.

For each image $x_i \in S_{train}^{novel}$ of the few-shot training dataset 501, the image encoder 502 may generate from the image a corresponding visual feature vector $\Phi_I(x_i)$ in the image space $I$. The resulting N visual feature vectors 503.1-503.N are illustrated by dots in Figure 5A.

The visual feature vectors 503.1-503.N may be combined based on their respective object class. For example, for each object class $k$ ($k$ = 1, 2, ...M) of the M object classes, the ($N_k$) visual feature vectors $\Phi_I(x_i)$ that represent that object class *k* may be combined to provide a visual center of mass feature vector $p^k$ (which may be named a visual prototype). This may result in M visual center of mass feature vectors 504.1-M as indicated in Figure 5A by the crosses, wherein each cross has a different filling structure to indicate the respective object class. The combination may for example be performed as follows: $p^k = \frac{1}{|S_{\text{train}}^k|} \sum_{(x_i, y_i) \in S_{\text{train}}^k} \Phi_I(x_i)$, where $S_{\text{train}}^k = \{(x_i, y_i) \in S_{\text{train}}^{\text{novel}}, y_i = k\}_{i=1}^n$ is the set of all training pairs $(x_i, y_i)$ for class *k*.

The image encoder 502 may further generate from the input image 505 $x_{input}$ a corresponding input visual feature vector $\Phi_I(x_{input})$ in the image space *I*. The resulting visual feature vector 506 is illustrated by a dot in Figure 5A. The input image may for example be part of a test sample that may be defined as follows:

$$S_{\text{test}} = \{(x_i, y_i) : y_i \in C_{\text{novel}}\}_{i=1}^m$$, where $S_{\text{test}} \cap S_{\text{train}} = \emptyset$.

A distance function such as a cosine distance may be used to compute the distance of the input visual feature vector $\Phi_I(x_{input})$ to each of the M visual center of mass feature vector $p^k$ 504.1-M. This may result in M distances d1 to dM as indicated in Figure 5A.

The computed distances d1 to dM may be used to determine the class membership of the object in the input image 505. For example, the class k whose associated distance dk is the smallest distance among d1 to dM may be the class of the object in the input image 505. The class membership may for example be determined by finding the closest prototype given a distance function $d(.)$ as follows $ar g_k$ min $d(\Phi_I(x_{input}), p^k)$. This equation may provide a powerful classification in particular as the image space is a discriminative representation of visual data.

The method of Figure 4A may enable to assign the class of the closest visual center of mass feature vector to an unseen test sample. However, due to the few-shot scenario and the intrinsic feature sparsity in the training space, the few-shot training dataset $S_{\text{train}}^{\text{novel}}$ may be limited such that the computed class prototypes $\{p^k : k \in C_{\text{novel}}\}$ may yield a rough approximation of the true class mean.

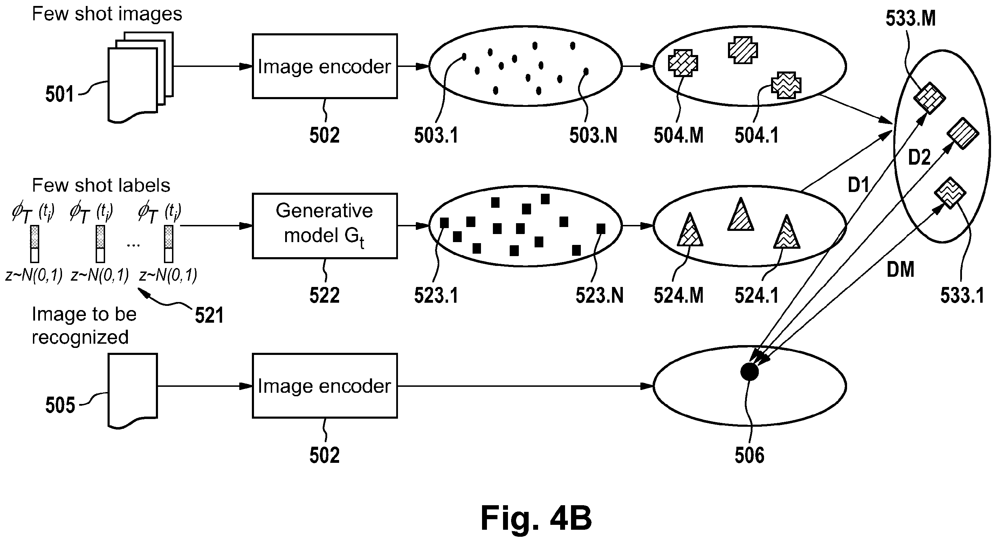

In order to further improve the classification, the training space may be enriched by leveraging the multimodality in $S_{\text{train}}^{\text{novel}}$ as described with reference to Figure 4B. This may enable the calculation of more reliable estimations of the class prototypes.

**Figure 4B** is a diagram illustrating a method for recognizing an object in an image 505. The method of Figure 5B generates the visual center of mass feature vectors 504.1-M and the input visual feature vector 506 as described with reference to Figure 5A.

Textual samples may further be provided such that the training dataset $S_{\text{train}}$ may comprise tuples $\{(x_i, t_i, y_i)\}_{i=1}^n$ of images $x_i$, associated textual samples $t_i$ and associated classes $y_i$ of the whole class space *C* defined with reference to Figure 5A. Using the additional textual samples, the few-shot training dataset $S_{\text{train}}^{\text{novel}}$ may be defined as follows $S_{\text{train}}^{\text{novel}} = \{(x_i, t_i, y_i) : (x_i, t_i, y_i) \in S_{\text{train}}, y_i \in C_{\text{novel}}\}_{i=1}^q \subset S_{\text{train}}$, where in a accordance with a few-shot scenario $q = |S_{\text{train}}^{\text{novel}}| \ll |S_{\text{train}}| = n$. Additionally, in a few-shot learning scenario, the number of samples per class may be limited to *g*, denoted by $S_{\text{train}}^{\text{novel}}(g)$.

The few-shot training dataset comprises textual samples that may be descriptive of the images 501 or other images. For example, each textual sample $t_i$ of the few-shot training dataset may be descriptive of a respective image $x_i$ of the images 501. The textual samples may for example be pre-processed as described with reference to Figure 1B or Figure 1C to generate respective text vectors in the text space *T* by a text encoder, wherein the text vectors are concatenated with noise vectors to provide noised textual vectors 521 $\Phi_T(t_i)$.

As shown in Figure 4B, the vectors $\Phi_T(t_i)$ are input to a trained generative model 522. The trained generative model 522 may for example be the generative model of Figure 1B or the generative module of Figure 1C.

For each noised text vector $\Phi_T(t_i)$, the generative model 522 may generate a corresponding visual feature vector $G_t(\Phi_T(t_i))$ in the image space *I*. The resulting N visual feature vectors 523.1-523.N are illustrated by full squares in Figure 4B. Thus, by having learned a text-to-image feature mapping, the generative model 522 may be used to generate additional visual features $G_t(\Phi_T(t_i))$ given a textual description $t_i$ and a pre-trained text encoder $\Phi_T(.)$.

The visual feature vectors $G_t(\Phi_T(t_i))$ of the textual samples may be combined based on their respective object class. For example, for each object class *k* of the M object classes, the $(N_k)$ visual feature vectors $G_t(\Phi_T(t_i))$ that represent that object class *k* may be combined to provide a visual center of mass feature vector $p_T^k$. This may result in M visual center of mass feature vectors 524.1-M as indicated in Figure 4B by the triangles, wherein each triangle has a different filling structure to indicate the respective object class. The combination may for example be performed as follows:

$$p_T^k = \frac{1}{|S_{\text{train}}^k|} \Sigma_{(t_i, y_i) \in S_{\text{train}}^k} \; G_t(\Phi_T(t_i)) \; .$$

The visual center of mass feature vectors 504.1-M that are obtained from images and the visual center of mass feature vectors 524.1-M that are obtained from textual samples may be combined e.g. using a weighted average to provide M multi-modal center of mass feature vectors 533.1-M as indicated in Figure 4B by squares, wherein each square has a different filling structure to indicate the respective object class. The combination may be performed as follows: $\frac{p^k + \lambda * p_T^k}{1 + \lambda}$, where $p^k \lambda$ is a predefined weighting factor.

A distance function such as a cosine distance may be used to compute the distance of the input visual feature vector $\Phi_I(x_{input})$ to each of the M multi-modal center of mass feature vector. This may result in M distances D1 to DM as indicated in Figure 5B.

The computed distances D1 to DM may be used to determine the class membership of the object in the input image 505. For example, the class k whose associated distance Dk is the smallest distance among D1 to DM may be the class of the object in the input image 505. The class membership may for example be determined as follows

$$arg_k \min d\left(\Phi_I\left(x_{input}\right), \frac{p^k + \lambda * p_T^k}{1 + \lambda}\right) \; .$$

The methods of Figure 4A and 4B may for example be tested using images 501, 505 and textual samples from known databases as follows. For example, a fine-grained multimodal classification dataset may be used. The classification dataset may comprise a CUB-200 dataset obtained from the CUB-200-2011 data source with bird data. The CUB-200 dataset contains 11,788 images of 200 different bird species, with $\mathcal{I} \subset \mathbb{R}^{256 \times 256}$. The dataset is split equally into training and test data. As a consequence, samples are roughly equally distributed, with training and test set each containing 30 images per category or class. Additionally, 10 short textual descriptions per image are provided. A text-encoder pre-trained yielding a text embedding space $T \subset \mathbb{R}^{1024}$ with a CNN-RNN-based encoding function may be used. The dataset is split such that $|C_{base}| = 150$ and $|C_{novel}| = 50$. To simulate few-shot learning, $n \in \{1, 2, 5, 10, 20\}$ images of $C_{novel}$ are used for training. Using this dataset, a 50-way classification may be performed such that during test time, all classes are considered for the classification task.

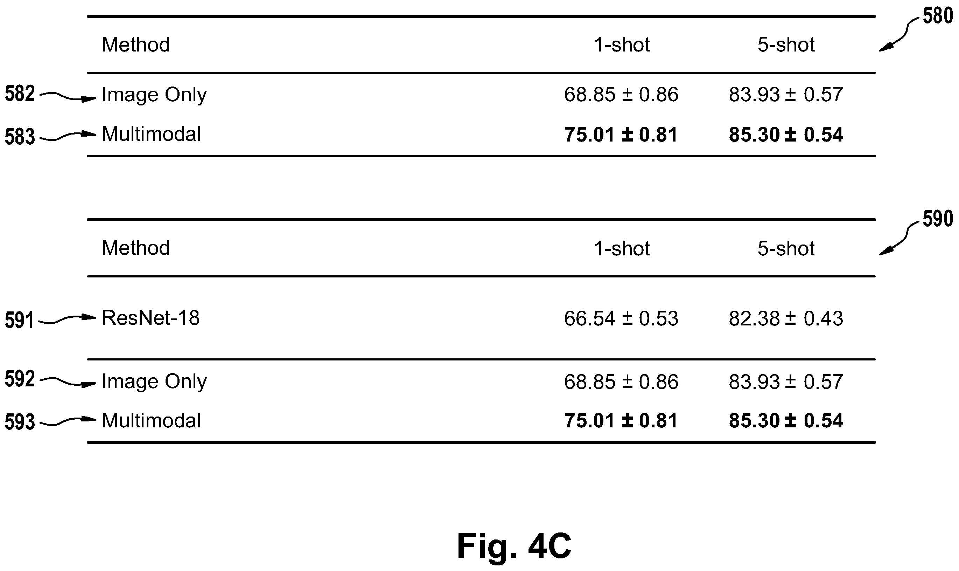

Since the classification results may depend on the choice of samples available in a few-shot scenario, the experiments may run 600 times following and a random few-shot episode may be sampled, i.e. a random choice of n samples per class in every iteration to cover randomness. The average top-5 accuracy including 95% confidence intervals are shown in Table 580 of Figure 4C for the method Figure 4A 582 and the method Figure 4B 583.

Instead of performing a 50-way classification, the results for ReseNet-18 are reported for 5-way classification in the 1- and 5-shot scenarios. This implies that in every few-shot learning episode, 5 random classes are sampled for which a classification task has to be solved, followed by the choice of n samples that are available per class. For the sake of comparability, the present method is evaluated in the same experimental setup. The experiment is repeated for 600 episodes and an average top-1 accuracy and 95% confidence intervals is reported in table 590 of Figure 4C which shows the results of classification in term of Top-1 accuracies for the 5-way classification task on the CUB-200 dataset using the method of Figure 4A (with results 592) and the method of Figure 4B (with results 593) compared with results 591 of a few-shot learning method using ResNet-18.

**Figure 5** is a diagram of a computer system 600 for training a text-conditional generative model 605 (such as the generative model 131 and 522) in accordance with an example of the present subject matter.

The computer system 600 comprises an image encoder 601. The image encoder 601 is configured to generate from an image $x_i$ 611 a visual feature vector $\Phi_I(x_i)$ 613 representing the image 611 in an image space $I$. The image encoder 601 may for example be a trained encoder as described with the image encoder of Figure 1A, 1B or 1C.

The computer system 600 further comprises a text encoder 603. The text encoder 603 may be configured to encode a textual sample $t_i$ 612 to provide a textual feature vector $\Phi_T(t_i)$ in a textual space. The text encoder 603 may for example be the text encoder described with reference to Figure 1C. A conditioning augmentation may be performed on the textual feature vector $\Phi_T(t_i)$ to condense the textual space during training. In addition, a noise vector may be sampled from a noise prior $Z \in \mathbb{R}^Z \sim N(0,1)$ and the noise vector may be concatenated with the textual feature vector $\Phi_T(t_i)$ (after being condition augmented) and the resulting textual feature vector $\Phi_T(t_i)$ 614 is provided as input to the generative model 605. The generative model 605 is configured to generate from the input textual feature vector $\Phi_T(t_i)$ a visual feature vector $G_t(\Phi_T(t_i))$ representing the textual sample $t_i$ (and also representing the textual feature vector $\Phi_T(t_i)$) in the image space $I$.

The computer system 600 further comprises a discriminative model 607 that may be used for training the generative model 605 as follows. For example, the generative model 605 and the discriminative model 607 may be trained (or jointly trained) using the textual feature vectors $\Phi_T(t_i)$ 614 and the visual feature vector $\Phi_I(x_i)$ 613 so that the generative model 605 may generate visual feature vectors $G_t(\Phi_T(t_i))$ from textual feature vectors $\Phi_T(t_i)$ 614 and the discriminative model 607 may determine if the generated visual feature vector $G_t(\Phi_T(t_i))$ is a real feature vector or generated feature vector. The generative model 605 and the discriminative model 607 may be trained by optimizing the following first loss function $\mathbb{E}_{x_i \sim p_{data}}[\log D(\Phi_I(x_i))] + \mathbb{E}_{t_i \sim p_{data}, z}[\log D(G_t(\Phi_T(t_i), z))]$.

As indicated in Figure 5, the discriminative model 607 may further be configured or trained to classify the generated feature vector $G_t(\Phi_T(t_i))$ into one of predefined object classes such as the base classes $C_{base}$ described with reference to Figure 4A. In other terms, the system 600 enables to add an auxiliary task of class prediction during the training of the generative model 605 and the discriminative model 607. This entails augmenting the first loss function with a discriminative classification term, which is defined as $\mathcal{L}_{class}(D) = \mathbb{E}_{C,I}[\log p(C|I)]$ and $\mathcal{L}_{class}(G_t) \triangleq \mathcal{L}_{class}(D)$.

By augmenting the first loss function with the defined auxiliary term, the optimization objectives for the generative model 605 and the discriminative model 607 may be defined as follows respectively:

$$\mathcal{L}(G_t) = \mathbb{E}_{x_i \sim p_{data}}[\log D(\Phi_I(x_i))] + \mathbb{E}_{t_i \sim p_{data}, z}[\log D(G_t(\Phi_T(t_i), z))] - \mathcal{L}_{class}(G_t)$$ and

$$\mathcal{L}(D) = \mathbb{E}_{x_i \sim p_{data}}[\log D(\Phi_I(x_i))] + \mathbb{E}_{t_i \sim p_{data}, z}[\log D(G_t(\Phi_T(t_i), z))] + \mathcal{L}_{class}(D)$$. The two loss functions are optimized in an adversarial fashion. The adversarial nature of the task forces the generative model 605 to focus on the most class-discriminative feature elements.

The optimization of the augmented loss function of the discriminative model may for example comprise backpropagation of error information indicative of the error produced by the neural network of the discriminative model when it makes predictions of a real or false visual feature vector and the error produced by the neural network of the discriminative model and when it makes predictions of a class of a visual feature vector. The optimization of the augmented loss function of the discriminative model may for example comprise backpropagation of error information indicative of the error produced by the neural network of the generative model when it generates a visual feature vector with a given class. For that, the discriminative model 607 may for example be in a feedback loop with the classes and or a label indicating *real* or false images 611 and the generative model 605 may for example be in a feedback loop with the discriminative model 607.

The term "computer system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC.

Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some causes be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results.

The preceding figures and accompanying description illustrate the example processes and computer implementable techniques. But example environment (or their software or other components) contemplate using, implementing, or executing any suitable technique for performing these and other tasks. It will be understood that these processes are for illustration purposes only and that the described or similar techniques may be performed at any appropriate time, including concurrently, individually, in parallel, and/or in combination. In addition, many of the operations in these processes may take place simultaneously, concurrently, in parallel, and/or in different orders than as shown. Moreover, the example environment may use processes with additional, fewer and/or different operations, as long as the methods remain appropriate.

In other words, although this disclosure has been described in terms of certain implementations and generally associated methods, alterations and permutations of these implementations and methods will be apparent to those skilled in the art. Accordingly, the above description of example implementations does not define or constrain this disclosure. Other changes, substitutions, and alterations are also possible without departing from the spirit and scope of this disclosure.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The term "control system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC.

Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

**EP 3 754 548 B1**

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some causes be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results. ponents and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results.

## Claims

1. A method for recognizing an object in an input image, comprising:

   - providing an image encoder (120, 502, 601) configured to encode an image to provide a visual feature vector representing the image in an image space, the image encoder (120, 502, 601) comprising a trained convolutional neural network (121), wherein the image space is defined by a fully connected layer of the convolutional neural network;
   - providing a generator (130, 522) configured to generate a visual feature vector representing a textual sample in the image space, the generator comprising a trained generative model (131);
   - providing a dataset comprising images of a number of classes ($C_{novel}$);
   - providing textual samples descriptive of the respective images in the dataset ($C_{novel}$);
   - generating by the generator (130, 522) visual feature vectors (123) representing the textual samples of the dataset in the image space;
   - encoding by the image encoder the images of the dataset to provide respective visual feature vectors (122) representing the images in the image space;
   - providing multi-modal center of mass feature vectors (124) representing object classes in the image space, said providing comprising combining the visual feature vectors (122) of the images and the visual feature vectors (123) of the textual samples of a same class of the classes into multi-modal center of mass feature vectors;
   - encoding by the image encoder (120, 502, 601) the input image (505) to provide an input visual feature vector (506) representing the input image (505);
   - recognizing the object by selecting one of the multi-modal center of mass feature vectors (124) using a proximity criterion relative to the input visual feature vector (506).

2. The method of Claim 1, wherein the convolutional neural network of the image encoder is trained with images that have base classes different from the novel classes.

3. The method of Claim 1 or 2, wherein the convolutional neural network comprises a classification layer with a number of units corresponding to a predefined number of base object classes.

4. The method of any of the preceding claims, comprising storing the multi-modal center of mass feature vectors as

16

further reference values for object recognition.

5. The method of any of the preceding claims, the proximity criterion comprising

- using a distance function for determining the distance (d1-dM, D1-DM) of the input visual feature vector (506) to each multi-modal center of mass feature vector of the multi-modal center of mass feature vectors (124);
- selecting the multi-modal center of mass feature vector (124) having the smallest distance to the input visual feature vector (506).

6. The method of any of the preceding claims, further comprising repeating the method for recognizing objects in multiple inputs images, resulting in multiple recognized objects, storing the input images in a database and searching the images of the database using the recognized object classes as a search criterion.

7. The method of any of the preceding claims, further comprising entering the class of the recognized object into an enterprise resource planning system or a catalogue system, querying a database related to the recognized object using the class for the query.

8. The method of any of the preceding claims, further comprising entering the recognized object class into an electronic payment system, performing a database access for obtaining a price information related to the recognized object and out-putting a request for payment in accordance with the obtained price information.

9. The method of any of the preceding claims, wherein the generative model is trained on images $x_i$ and associated textual samples $t_i$, so that the generative model applied to a textual sample $t_i$ approximates the image encoder applied to the associated image $x_i$.

10. The method of any of the preceding claims, the method further comprising generating by the generator at least one textual feature vector representing in the image space at least one further textual sample of at least one further class; if the at least one textual feature vector comprises multiple textual feature vectors of a same further class of the at least one further class combining the multiple textual feature vector of that same further class into a textual center of mass feature vector; storing the at least one textual center of mass feature vector and/or the at least one textual feature vector as further reference values for object recognition.

11. The method of any of the preceding claims, wherein the combining of the feature vectors comprises computing a weighted average of the feature vectors.

12. The method of any of the preceding claims, wherein generating by the generator visual feature vectors representing the textual samples of the dataset in the image space comprises encoding by a text encoder each textual sample to provide a textual feature vector in a textual space, compressing the textual feature vector and generating from the compressed textual feature vector the visual feature vector in the image space, the text encoder comprising a trained convolutional neural network, wherein the textual space is defined by a last hidden layer of the convolutional neural network.

13. The method of claim 10 or 11 or 12, further comprising obtaining the trained generative model by:

- providing a discriminative model;
- providing a base training dataset comprising at least textual samples descriptive of images of a number of base classes ($C_{base}$);
- inputting the textual samples of the base classes into the text encoder;
- outputting by the text encoder text vectors of the input textual samples;
- training the generative model (605) and the discriminative model (607) using the text vectors of the input textual samples, the training comprising:

    training the generative model to generate visual feature vectors from the textual feature vectors and training the discriminative model, using generated visual feature vectors by the generative model and real visual feature vectors of images, to determine if a visual feature vector is a real visual feature vector or generated feature vector, and to classify the visual feature vector into one of the base classes, wherein the training is performed with back-propagation for optimizing a loss function of the generative model and another loss function of the discriminative model.

**14.** The method of claim 13, the base training dataset further comprising images of the number of base classes, the method further comprising:

inputting the images of the base classes into the image encoder;
outputting by the image encoder the real visual feature vectors of the input images.

**15.** The method of claim 13 or 14, wherein the loss function of the discriminative model is

$$\mathbb{E}_{x_i \sim p_{data}}[\log D(\Phi_I(x_i))] + \mathbb{E}_{t_i \sim p_{data},z}[\log D(G_t(\Phi_T(t_i), z))] + \mathbb{E}_{C,I}[\log p(C|I)]$$ and the loss

function of the generative model is

$$\mathbb{E}_{x_i \sim p_{data}}[\log D(\Phi_I(x_i))] + \mathbb{E}_{t_i \sim p_{data},z}[\log D(G_t(\Phi_T(t_i), z))] - Q \qquad , \qquad \text{where}$$

$Q \triangleq \mathbb{E}_{C,I}[\log p(C|I)]$ , where $\Phi_I(x_i)$ is the feature vector of the image $x_i$ in the image space $I$, $\Phi_T(t_i)$ is the feature vector of the textual sample $t_i$ in the textual space $T$, $G_t$ is the generative model and $D$ is the discriminative model, z is a noise source value that is used for conditioning augmentation of the textual sample $t_i$.

**16.** The method of any of the preceding claims, wherein the generator is a generator of a generative adversarial net, GAN, framework.

**17.** A computer system being configured to perform a method of any one of the preceding claims.

**18.** The computer system of claim 17, being an end user device having an electronic memory storing the multi-modal center of mass vectors representing object classes in the image space.

**19.** The computer system of claim 17, being a server computer system having an electronic memory storing the multi-modal center of mass vectors representing object classes in the image space, the computer system having a network interface for enabling downloading of the multi-modal center of mass vectors to an end user device.

**20.** The computer system of claims 18 or 19, the end user device being a battery powered handheld appliance.

**21.** The computer system of any one of claims 17 to 20, the computer system being a medical device, wherein at least one of the classes is indicative of a disease being diagnosable by optical inspection.

**22.** The computer system of claim 17, being a computer vision system.

**23.** A computer program, in particular a computer program product or a digital storage medium, comprising computer executable instructions for executing a method of any one of the preceding claims 1 to 16.

**Patentansprüche**

**1.** Verfahren zum Erkennen eines Objekts in einem Eingabebild, das umfasst:

- Bereitstellen eines Bildkodierers (120, 502, 601), der dazu ausgelegt ist, ein Bild zu kodieren, um einen visuellen Merkmalsvektor bereitzustellen, der das Bild in einem Bildraum repräsentiert, wobei der Bildkodierer (120, 502, 601) ein trainiertes Faltungsnetzwerk (CNN) (121) umfasst, wobei der Bildraum durch eine vollständig verbundene Schicht des Faltungsnetzwerks definiert ist;
- Bereitstellen eines Generators (130, 522), der dazu ausgelegt ist, einen visuellen Merkmalsvektor zu erzeugen, der eine Textprobe im Bildraum repräsentiert, wobei der Generator ein trainiertes generatives Modell (131) umfasst;
- Bereitstellen eines Datensatzes, der Bilder einer Anzahl von Klassen umfasst ($C_{Neu}$);
- Bereitstellen von Textproben, die die jeweiligen Bilder im Datensatz ($C_{Neu}$) beschreiben;
- Erzeugen, durch den Generator (130, 522), visueller Merkmalsvektoren (123), die die Textproben des Datensatzes im Bildraum repräsentieren;
- Kodieren, durch den Bildkodierer, der Bilder des Datensatzes, um jeweilige visuelle Merkmalsvektoren (122) bereitzustellen, die die Bilder im Bildraum repräsentieren;
- Bereitstellen multimodaler Massezentrumsmerkmalsvektoren (124), die Objektklassen im Bildraum repräsentieren, wobei das Bereitstellen ein Kombinieren der visuellen Merkmalsvektoren (122) der Bilder und der visuellen Merkmalsvektoren (123) der Textproben einer gleichen Klasse der Klassen zu multimodalen Massezentrumsmerkmalsvektoren umfasst;

- Kodieren, durch den Bildkodierer (120, 502, 601), des Eingabebilds (505), um einen visuellen Eingabemerkmalsvektor (506) bereitzustellen, der das Eingabebild (505) repräsentiert;

- Erkennen des Objekts durch Auswählen eines der multimodalen Massezentrumsmerkmalsvektoren (124) unter Verwendung eines Näherungskriteriums relativ zu dem visuellen Eingabemerkmalsvektor (506).

2. Verfahren nach Anspruch 1, wobei das Faltungsnetzwerk des Bildkodierers mit Bildern trainiert wird, die Basisklassen aufweisen, die sich von den neuen Klassen unterscheiden.

3. Verfahren nach Anspruch 1 oder 2, wobei das Faltungsnetzwerk eine Klassifizierungsschicht mit einer Anzahl von Einheiten umfasst, die einer vordefinierten Anzahl von Basisobjektklassen entspricht.

4. Verfahren nach einem der vorhergehenden Ansprüche, das ein Speichern der multimodalen Massezentrumsmerkmalsvektoren als weitere Referenzwerte zur Objekterkennung umfasst.

5. Verfahren nach einem der vorhergehenden Ansprüche, wobei das Näherungskriterium umfasst

- Verwenden einer Abstandsfunktion zum Bestimmen des Abstands (d1-dM, D1-DM) des visuellen Eingabemerkmalsvektors (506) zu jedem multimodalen Massezentrumsmerkmalsvektor der multimodalen Massezentrumsmerkmalsvektoren (124);

- Auswählen des multimodalen Massezentrumsmerkmalsvektors (124) mit dem kleinsten Abstand zu dem visuellen Eingabemerkmalsvektor (506).

6. Verfahren nach einem der vorhergehenden Ansprüche, das ferner ein Wiederholen des Verfahrens zum Erkennen von Objekten in mehreren Eingabebildern, was zu mehreren erkannten Objekten führt, Speichern der Eingabebilder in einer Datenbank und Durchsuchen der Bilder der Datenbank unter Verwendung der erkannten Objektklassen als Suchkriterium umfasst.

7. Verfahren nach einem der vorhergehenden Ansprüche, das ferner ein Eingeben der Klasse des erkannten Objekts in ein Unternehmensressourcenplanungssystem oder ein Katalogsystem, Abfragen einer Datenbank in Bezug auf das erkannte Objekt unter Verwendung der Klasse für die Abfrage umfasst.

8. Verfahren nach einem der vorhergehenden Ansprüche, das ferner ein Eingeben der erkannten Objektklasse in ein elektronisches Zahlungssystem, Durchführen eines Datenbankzugriffs zum Erhalten einer Preisinformation in Bezug auf das erkannte Objekt und Ausgeben einer Zahlungsanforderung gemäß der erhaltenen Preisinformation umfasst.

9. Verfahren nach einem der vorhergehenden Ansprüche, wobei das generative Modell an Bildern $x_i$ und assoziierten Textproben $t_i$ trainiert wird, so dass das generative Modell, das auf eine Textprobe $t_i$ angewendet wird, sich dem Bildkodierer, der auf das assoziierte Bild $x_i$ angewendet wird, nähert.

10. Verfahren nach einem der vorhergehenden Ansprüche, wobei das Verfahren ferner ein Erzeugen, durch den Generator, mindestens eines Textmerkmalsvektors, der im Bildraum mindestens eine weitere Textprobe mindestens einer weiteren Klasse repräsentiert; wenn der mindestens eine Textmerkmalsvektor mehrere Textmerkmalsvektoren einer gleichen weiteren Klasse der mindestens einen weiteren Klasse umfasst, Kombinieren der mehreren Textmerkmalsvektoren derselben weiteren Klasse zu einem Textmassezentrumsmerkmalsvektor; Speichern des mindestens einen Textmassezentrumsmerkmalsvektors und/oder des mindestens einen Textmerkmalsvektors als weitere Referenzwerte zur Objekterkennung umfasst.

11. Verfahren nach einem der vorhergehenden Ansprüche, wobei das Kombinieren der Merkmalsvektoren ein Berechnen eines gewichteten Mittelwerts der Merkmalsvektoren umfasst.

12. Verfahren nach einem der vorhergehenden Ansprüche, wobei das Erzeugen, durch den Generator, visueller Merkmalsvektoren, die die Textproben des Datensatzes im Bildraum repräsentieren, ein Kodieren, durch einen Textkodierer, jeder Textprobe, um einen Textmerkmalsvektor in einem Textraum bereitzustellen, Komprimieren des Textmerkmalsvektors und Erzeugen, aus dem komprimierten Textmerkmalsvektor, des visuellen Merkmalsvektors im Bildraum umfasst, wobei der Textkodierer ein trainiertes Faltungsnetzwerk umfasst, wobei der Textraum durch eine letzte verborgene Schicht des Faltungsnetzwerks definiert ist.

13. Verfahren nach Anspruch 10 oder 11 oder 12, das ferner ein Erhalten des trainierten generativen Modells umfasst durch:

   - Bereitstellen eines diskriminativen Modells;
   - Bereitstellen eines Basistrainingsdatensatzes, der mindestens Textproben umfasst, die Bilder einer Anzahl von Basisklassen beschreiben ($C_{Basis}$);
   - Eingeben der Textproben der Basisklassen in den Textkodierer;
   - Ausgeben, durch den Textkodierer, von Textvektoren der eingegebenen Textproben;
   - Trainieren des generativen Modells (605) und des diskriminativen Modells (607) unter Verwendung der Textvektoren der eingegebenen Textproben, wobei das Trainieren umfasst:

   Trainieren des generativen Modells, um visuelle Merkmalsvektoren aus den Textmerkmalsvektoren zu erzeugen, und
   Trainieren des diskriminativen Modells unter Verwendung durch das generative Modell erzeugter visueller Merkmalsvektoren und realer visueller Merkmalsvektoren von Bildern, um zu bestimmen, ob ein visueller Merkmalsvektor ein realer visueller Merkmalsvektor oder ein erzeugter Merkmalsvektor ist, und um den visuellen Merkmalsvektor in eine der Basisklassen zu klassifizieren, wobei das Trainieren mit Rückpropagation zum Optimieren einer Verlustfunktion des generativen Modells und einer anderen Verlustfunktion des diskriminativen Modells durchgeführt wird.

14. Verfahren nach Anspruch 13, wobei der Basistrainingsdatensatz ferner Bilder der Anzahl von Basisklassen umfasst, wobei das Verfahren ferner umfasst: Eingeben der Bilder der Basisklassen in den Bildkodierer; Ausgeben, durch den Bildkodierer, der realen visuellen Merkmalsvektoren der Eingabebilder.

15. Verfahren nach Anspruch 13 oder 14, wobei die Verlustfunktion des diskriminativen Modells $E_{x_i \sim p_{Daten}}[logD(\Phi_I(x_i))] + E_{t_i \sim p_{Daten},z}[logD(G_T(\Phi_T(t_i), z))] + E_{C,I}[logp(C|I)]$ ist und die Verlustfunktion des generativen Modells $E_{x_i \sim p_{Daten}}[logD(\Phi_I(x_i))] + E_{t_i \sim p_{Daten},z}[logD(G_T(\Phi_T(t_i), z))] - Q$ ist, wobei $Q \triangleq E_{C,I}[logp(C|I)]$, wobei $\Phi_i(x_i)$ der Merkmalsvektor des Bilds $x_i$ in dem Bildraum I ist, $\Phi_T(t_i)$ der Merkmalsvektor der Textprobe $t_i$ in dem Textraum T ist, Gt das generative Modell ist und D das diskriminative Modell ist, z ein Rauschquellenwert ist, der zum Konditionieren einer Erweiterung der Textprobe $t_i$ verwendet wird.

16. Verfahren nach einem der vorhergehenden Ansprüche, wobei der Generator ein Generator eines Generative Adversarial Net-Rahmenwerks, GAN-Rahmenwerks, ist.

17. Computersystem, das dazu ausgelegt ist, ein Verfahren nach einem der vorhergehenden Ansprüche durchzuführen.

18. Computersystem nach Anspruch 17, das eine Endbenutzervorrichtung mit einem elektronischen Speicher ist, der die multimodalen Massezentrumsvektoren speichert, die Objektklassen im Bildraum repräsentieren.

19. Computersystem nach Anspruch 17, das ein Server-Computersystem mit einem elektronischen Speicher ist, der die multimodalen Massezentrumsvektoren speichert, die Objektklassen im Bildraum repräsentieren, wobei das Computersystem eine Netzwerkschnittstelle zum Ermöglichen des Herunterladens der multimodalen Massezentrumsvektoren auf eine Endbenutzervorrichtung aufweist.

20. Computersystem nach Anspruch 18 oder 19, wobei die Endbenutzervorrichtung ein batteriebetriebenes Handgerät ist.

21. Computersystem nach einem der Ansprüche 17 bis 20, wobei das Computersystem eine medizinische Vorrichtung ist, wobei mindestens eine der Klassen eine Krankheit angibt, die durch optische Untersuchung diagnostizierbar ist.

22. Computersystem nach Anspruch 17, das ein Computer-Vision-System ist.

23. Computerprogramm, insbesondere ein Computerprogrammprodukt oder ein digitales Speicherungsmedium, das computerausführbare Anweisungen zum Ausführen eines Verfahrens nach einem der vorhergehenden Ansprüche 1 bis 16 umfasst.

**Revendications**

1. Procédé de reconnaissance d'un objet dans une image d'entrée, comprenant :

   - la fourniture d'un codeur d'image (120, 502, 601) configuré pour coder une image pour fournir un vecteur de caractéristiques visuelles représentant l'image dans un espace d'image, le codeur d'image (120, 502, 601) comprenant un réseau neuronal convolutif entraîné (121) dans lequel l'espace d'image est défini par une couche complètement connectée du réseau neuronal convolutif ;
   - la fourniture d'un générateur (130, 522) configuré pour générer un vecteur de caractéristiques visuelles représentant un échantillon textuel dans l'espace d'image, le générateur comprenant un modèle génératif entrainé (131) ;
   - la fourniture d'un ensemble de données comprenant des images d'un nombre de classes ($C_{novel}$) ;
   - la fourniture d'échantillons textuels décrivant les images respectives dans l'ensemble de données ($C_{novel}$) ;
   - la génération par le générateur (130, 522) de vecteurs de caractéristiques visuelles (123) représentant les échantillons textuels de l'ensemble de données dans l'espace d'image ;
   - le codage par le codeur d'image des images dans l'ensemble de données pour fournir des vecteurs de caractéristiques visuelles respectifs (122) représentant les images dans l'espace d'image ;
   - la fourniture de vecteurs de caractéristiques de centre de masse multimodals (124) représentant des classes d'objets dans l'espace d'image, ladite fourniture comprenant une combinaison des vecteurs de caractéristiques visuelles (122) des images et des vecteurs de caractéristiques visuelles (123) des échantillons textuels d'une même classe des classes dans des vecteurs de caractéristiques de centre de masse multimodals ;
   - le codage par le codeur d'image (120, 502, 601) de l'image d'entrée (505) pour fournir un vecteur de caractéristiques visuelles d'entrée (506) représentant l'image d'entrée (505) ;
   - la reconnaissance de l'objet en sélectionnant un des vecteurs de caractéristiques de centre de masse multimodals (124) à l'aide d'un critère de proximité relatif au vecteur de caractéristiques visuelles d'entrée (506).

2. Procédé selon la revendication 1, dans lequel le réseau neuronal convolutif du codeur d'image est entrainé avec des images qui ont des classes de base différentes des nouvelles classes.

3. Procédé selon la revendication 1 ou 2, dans lequel le réseau neuronal convolutif comprend une couche de classification avec un nombre d'unités correspondant à un nombre prédéfini de classes d'objets de base.

4. Procédé selon l'une quelconque des revendications précédentes, comprenant le stockage des vecteurs de caractéristiques de centre de masse multimodals en tant que valeurs de référence supplémentaires pour une reconnaissance d'objet.

5. Procédé selon l'une quelconque des revendications précédentes, le critère de proximité comprenant

   - l'utilisation d'une fonction de distance pour déterminer la distance (d1-dM, D1-DM) du vecteur de caractéristiques visuelles d'entrée (506) jusqu'à chaque vecteur de caractéristiques de centre de masse multimodal des vecteurs de caractéristiques de centre de masse multimodals (124) ;
   - la sélection du vecteur de caractéristiques de centre de masse multimodals (124) ayant la plus petite distance jusqu'au vecteur de caractéristiques visuelles d'entrée (506).

6. Procédé selon l'une quelconque des revendications précédentes, comprenant en outre la répétition du procédé de reconnaissance d'objets dans de multiples images d'entrées, conduisant à de multiples objets reconnus, à stocker les images d'entrée dans une base de données et à rechercher les images de la base de données à l'aide des classes d'objets reconnus en tant que critère de recherche.

7. Procédé selon l'une quelconque des revendications précédentes, comprenant en outre l'entrée de la classe de l'objet reconnu dans un système de planification de ressources d'entreprise ou un système de catalogue, l'interrogation d'une base de données associée à l'objet reconnu en utilisant la classe pour la requête.

8. Procédé selon l'une quelconque des revendications précédentes, comprenant en outre l'entrée de la classe de l'objet reconnu dans un système de paiement électronique, l'exécution d'un accès à une base de données pour obtenir des informations de prix relatives à l'objet reconnu et l'émission d'une demande de paiement en fonction des informations de prix obtenues.

9. Procédé selon l'une quelconque des revendications précédentes, dans lequel le modèle génératif est entrainé sur des images $x_i$ et des échantillons textuels associés $t_i$, de sorte que le modèle génératif appliqué à un échantillon textuel $t_i$ se rapproche du codeur d'image appliqué à l'image associée $x_i$.

10. Procédé selon l'une quelconque des revendications précédentes, le procédé comprenant en outre la génération par le générateur d'au moins un vecteur de caractéristiques textuelles représentant dans l'espace d'image au moins un échantillon textuel supplémentaire d'au moins une classe supplémentaire ; si l'au moins un vecteur de caractéristiques textuelles comprend de multiples vecteurs de caractéristiques textuelles d'une même classe supplémentaire de l'au moins une classe supplémentaire combinant les multiples vecteurs de caractéristiques textuelles de cette même classe supplémentaire dans un vecteur de caractéristiques de centre de masse textuel ; le stockage de l'au moins un vecteur de caractéristiques de centre de masse textuel et/ou de l'au moins un vecteur de caractéristiques textuel en tant que valeurs de référence supplémentaires pour une reconnaissance d'objet.

11. Procédé selon l'une quelconque des revendications précédentes, dans lequel la combinaison des vecteurs de caractéristiques comprend le calcul d'une moyenne pondérée des vecteurs de caractéristiques.

12. Procédé selon l'une quelconque des revendications précédentes, dans lequel la génération par le générateur de vecteurs de caractéristiques visuelles représentant les échantillons textuels de l'ensemble de données dans l'espace d'image comprend le codage par un codeur de texte de chaque échantillon textuel pour fournir un vecteur de caractéristiques textuelles dans un espace textuel, la compression du vecteur de caractéristiques textuelles et la génération à partir du vecteur de caractéristiques textuelles compressé du vecteur de caractéristiques visuelles dans l'espace d'image, le codeur de texte comprenant un réseau neuronal convolutif entraîné, l'espace textuel étant défini par une dernière couche cachée du réseau neuronal convolutif.

13. Procédé selon la revendication 10, 11 ou 12, comprenant en outre l'obtention du modèle génératif entrainé par :

   - la fourniture d'un modèle discriminatif ;
   - la fourniture d'un ensemble de données d'entrainement de base comprenant au moins des échantillons textuels décrivant des images d'un nombre de classes de base ($C_{rase}$) ;
   - l'entrée des échantillons textuels des classes de base dans le codeur de texte ;
   - la sortie par le codeur de texte des vecteurs de texte des échantillons textuels d'entrée ;
   - l'entrainement du modèle génératif (605) et du modèle discriminatif (607) à l'aide des vecteurs de texte des échantillons textuels d'entrée, l'entrainement comprenant :

      l'entrainement du modèle génératif pour générer des vecteurs de caractéristiques visuelles à partir des vecteurs de caractéristiques textuelles et
      l'entrainement du modèle discriminatif, à l'aide des vecteurs de caractéristiques visuelles générés par le modèle génératif et des vecteurs de caractéristiques visuelles réels d'images, pour déterminer si un vecteur de caractéristiques visuelles est un vecteur de caractéristiques visuelles réel ou un vecteur de caractéristiques généré, et pour classifier le vecteur de caractéristiques visuelles dans une des classes de base, dans lequel l'entrainement est exécuté avec rétro-propagation pour optimiser une fonction de perte du modèle génératif et une autre fonction de perte du modèle discriminatif.

14. Procédé selon la revendication 13, l'ensemble de données d'entrainement de base comprenant en outre des images du nombre de classes de base, le procédé comprenant en outre :

      l'entrée des images des classes de base dans le codeur d'image ;
      la sortie par le codeur d'image des vecteurs de caractéristiques visuelles réels des images d'entrée.

15. Procédé selon la revendication 13 ou 14, dans lequel la fonction de perte du modèle discriminatif est $E_{x_i \sim p_{données}}[\log D(\Phi_i(x_i))] + E_{t_i \sim p_{données},z}[\log D(G_t(\Phi_t(t_i),z))] + E_{C,I}[\log p(C|I)]$ et la fonction de perte du modèle génératif est $E_{x_i \sim p_{données}}[\log D(\Phi_I(x_i))g] + E_{t_i \sim p_{données},z}[\log D(G_t(\Phi_T(t_i), z))] - Q$, où $Q \triangleq E_{C,I}[\log p(C|I)]$, où $\Phi_I(x_i)$ est le vecteur de caractéristiques de l'image $x_i$ dans l'espace d'image $I$, $\Phi_T(t_i)$ est le vecteur de caractéristiques de l'échantillon textuel $t_i$ dans l'espace textuel $T$, $G_t$ est le modèle génératif et $D$ est le modèle discriminatif, $z$ est une valeur de source de bruit qui est utilisée pour conditionner l'augmentation de l'échantillon textuel $t_i$.

16. Procédé selon l'une quelconque des revendications précédentes, dans lequel le générateur est un générateur d'une structure de réseau antagoniste génératif, GAN.

17. Système informatique qui est configuré pour exécuter un procédé selon l'une quelconque des revendications précédentes.

18. Système informatique selon la revendication 17, qui est un dispositif d'utilisateur final ayant une mémoire électronique stockant les vecteurs de centre de masse multimodals représentant des classes d'objets dans l'espace d'image.

19. Système informatique selon la revendication 17, qui est un système informatique de serveur ayant une mémoire électronique stockant les vecteurs de centre de masse multimodals représentant des classes d'objets dans l'espace d'image, le système informatique ayant une interface de réseau pour permettre le téléchargement des vecteurs de centre de masse multimodals sur un dispositif d'utilisateur final.

20. Système informatique selon les revendications 18 ou 19, le dispositif d'utilisateur final étant un appareil portatif alimenté par batterie.

21. Système informatique selon l'une quelconque des revendications 17 à 20, le système informatique étant un dispositif médical, dans lequel au moins une des classes indique une maladie qui peut être diagnostiquée par inspection optique.

22. Système informatique selon la revendication 17, qui est un système de vision par ordinateur.

23. Programme informatique, en particulier un produit de programme informatique ou un support de stockage numérique, comprenant des instructions exécutables par ordinateur pour exécuter un procédé : selon l'une quelconque des revendications précédentes 1 à 16.

100

105
120
121

### Computer system

#### Memory

##### Image encoder
###### Trained CNN

103

Processor

##### feature vectors
122 123 124

Storage system

111

107

109
Network adapter

I/0 Interface

119

## Fig. 1A

100

105
130
131
120
121

### Computer system

#### Memory

##### Generator
###### Trained CNN

103

Processor

##### Image encoder
###### Trained CNN

##### feature vectors
122 123 124

Storage system

111

107

109
Network adapter

I/0 Interface

119

## Fig. 1B

**100**

Computer system

**105** Memory

**150** Text encoder

**130** Generator
**131** Trained CNN

**120** Image encoder
**121** Trained CNN

feature vectors

**122** **123** **124**

Processor **103**

Storage system **111**

**107**

**109** Network adapter

I/0 Interface **119**

# Fig. 1C

Encoding by an image encoder the input image
to provide an input visual feature vector
representing the input image in the image space —301

Recognizing the object of the input image
by selecting one of the visual center of mass vectors
that fulfils a proximity criterion
relative to the input visual feature vector —303

## Fig. 2

Encoding the images of the dataset
to provide respective visual feature vectors
representing the images in the image space —401

Generating visual feature vectors
representing the textual samples of the dataset
in the image space —403

Combining the visual feature vectors of the images
and the visual feature vectors the textual samples
of a same class of the classes
into a multi-modal center of mass feature vector —405

Storing the multi-modal center of mass feature vectors
as reference values for object recognition —407

## Fig. 3

**Fig. 4A**

EP 3 754 548 B1

Few shot images

**501**

Image encoder

**502**

**503.1** **503.N** **504.M** **504.1**

Few shot labels

$\phi_T (t_i)$ $\phi_T (t_i)$ ... $\phi_T (t_i)$

$z \sim N(0,1)$ $z \sim N(0,1)$ $z \sim N(0,1)$

**521**

Image to be recognized

**505**

Generative model $G_t$

**522**

**523.1** **523.N** **524.M** **524.1**

Image encoder

**502**

**506**

**533.M**

**D1** **D2** **DM**

**533.1**

Fig. 4B

EP 3 754 548 B1

| Method | 1-shot | 5-shot | 580 |
| --- | --- | --- | --- |
| 582 → Image Only | 68.85 ± 0.86 | 83.93 ± 0.57 | |
| 583 → Multimodal | **75.01 ± 0.81** | **85.30 ± 0.54** | |

| Method | 1-shot | 5-shot | 590 |
| --- | --- | --- | --- |
| 591 → ResNet-18 | 66.54 ± 0.53 | 82.38 ± 0.43 | |
| 592 → Image Only | 68.85 ± 0.86 | 83.93 ± 0.57 | |
| 593 → Multimodal | **75.01 ± 0.81** | **85.30 ± 0.54** | |

## Fig. 4C

EP 3 754 548 B1

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018192672 A
- US 10223586 B1

**Non-patent literature cited in the description**

- **K. HE** ; **X. ZHANG** ; **S. REN** ; **J. SUN**. Deep residual learning for image recognition. *CVPR*, 2016, vol. 6, 770-778
- **D. P. KINGMA** ; **J. BA. ADAM**. A method for stochastic optimization. *ICLR*, 2014, vol. 6
- **S. REED** ; **Z. AKATA** ; **H. LEE** ; **B. SCHIELE**. Learning deep representations of fine-grained visual descriptions. *CVPR*, 2016, vol. 3 (5), 49-58